# EUROPÄISCHE PATENTSCHRIFT

(11) **EP 1 593 584 B1**
(45) Veröffentlichungstag und Bekanntmachung des Hinweises auf die Patenterteilung: **05.03.2008**
(21) Anmeldenummer: 05005316.4
(22) Anmeldetag: 11.03.2005
(51) Int. Cl.: B62D 7/18, B60G 7/00

(54) **Radträger**
Wheel support
Support de roue

(30) Priorität: 04.05.2004 DE 102004021884
(43) Veröffentlichungstag der Anmeldung: 09.11.2005
(73) Patentinhaber: Dr.Ing. h.c. F. Porsche Aktiengesellschaft, 70435 Stuttgart (DE)
(72) Erfinder: Söffge, Friedhelm, 71229 Leonberg (DE)

(56) Entgegenhaltungen:
- EP-A- 0 987 166
- DE-A1- 10 212 873
- DE-A1- 19 915 633
- DE-A1- 19 931 018
- DE-C1- 19 533 315
- DE-U1- 29 819 912
- US-B1- 6 394 472
- PATENT ABSTRACTS OF JAPAN Bd. 005, Nr. 155 (M-090), 30. September 1981 (1981-09-30) & JP 56 082668 A (AKEBONO BRAKE IND CO LTD), 6. Juli 1981 (1981-07-06)

## Beschreibung

Die Erfindung bezieht sich auf ein Radträger nach dem Oberbegriff des Patentanspruchs 1.

Aus der gattungsgemäßen DE 199 31 018 A1 ist ein Radträger für eine Kraftfahrzeugachse eines Fahrzeugs bekannt, der aus zwei schalenförmigen Bauteilen besteht, die mittels einer Schweißung miteinander verbunden und zwischen den beiden Bauteilen Abstandselemente vorgesehen sind.

Aufgabe der Erfindung ist es, einen verbesserten Radträger zu schaffen, der in einfacher Weise herstellbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass der in seiner Struktur aus zwei schalenförmigen Bauteilen bestehende Radträger alleinig durch ein Umformvorgang bzw. eine Bördelung verbunden wird und somit ein sich nachteilig auf die Bauteile auswirkender Schweißverzug vermieden wird. Dies wird nach der Erfindung in vorteilhafter Weise dadurch erreicht, indem die schalenförmigen Bauteile korrespondierende Verbindungsbereiche zwischen den Lagerungen aufweisen, wobei diese Verbindungsbereiche durch Bördelungen mit ggf. teilweisen Sickungen gebildet werden. Die Bördelungen in den Verbindungsbereichen der beiden schalenförmigen Bauteile bestehen aus an einem Bauteil vorgesehenen Rand oder Abstellung und am weiteren schalenförmigen Bauteil aus einem den Rand oder Abstellung umgreifenden Bördelrand. Die Sickungen werden - wenn erforderlich - zur Verbesserung der Biegesteifigkeit eingebracht.

Damit in den Lagerbereichen eine Formstabilität gegen ein Eindrücken erhalten bleibt, ist nach der Erfindung des Weiteren vorgesehen, dass zwischen den beiden schalenförmigen Bauteilen Abstützungen im Bereich der Lagerungen vorgesehen sind. Ebenfalls ist im Zentrum der schalenförmigen Bauteile ein Abstützring mit Bohrungen angeordnet, der sich innenseitig der Bauteile flächig anlegt. Ferner ist nach der Erfindung vorgesehen, dass in einem Bauteil die Lager einen Hülsenring aufweisen, der anliegend zu den Bauteilen angeordnet ist.

Als Ersatz für einzusetzende Abstützungen, Ringe, Hülsen oder dgl. Mittel, zwischen den beiden schalenförmigen Bauteilen ist vorgesehen, dass das eine Bauteil im Bereich der Lager entsprechende Eindrückungen aufweist, die als Topf oder dgl. ausgeführt sind und sich mit einer Stirnfläche am weiteren Bauteil abstützen. Des Weiteren kann auch im Zentrum der beiden schalenförmigen Bauteile eine Eindrückung vorgesehen sein, die eine Mittenöffnung aufweist und mit ihrer Stirnfläche am gegenüberstehenden Bauteil abgestützt ist. Eine Verbesserung der Steifigkeit kann durch nachträgliches Verzinken des Radträgers erfolgen, wobei das Zink die Verbördelung zusätzlich schubsteif verbindet. In diesem Falle erübrigt sich eine Sickung.

Die Verbindung der beiden schalenförmigen Bauteile über randseitige Bördelungen ergeben Fertigungsvorteile hinsichtlich des Schweißverzugs, so das die Bauteile nach den Bördelungen keiner wesentlichen Nachbehandlung bedürfen.

Ein Ausführungsbeispiel der Erfindung ist in den Zeichnungen dargestellt und wird im Folgenden näher beschrieben.

Es zeigen
- Fig. 1: eine Draufsicht auf zwei miteinander über Bördelungen verbundenen schalenförmige Bauteile,
- Fig. 2: eine vergrößerte Darstellung der Einzelheit X aus Fig. 1,
- Fig. 3: eine Einzelheit des Radträgers mit eingelegten Abstützelementen,
- Fig. 4: einen Schnitt durch ein Ausführungsbeispiel nach der Linie IV-IV der Fig. 1,
- Fig. 5: einen Schnitt nach der Linie V-V der Fig. 1,

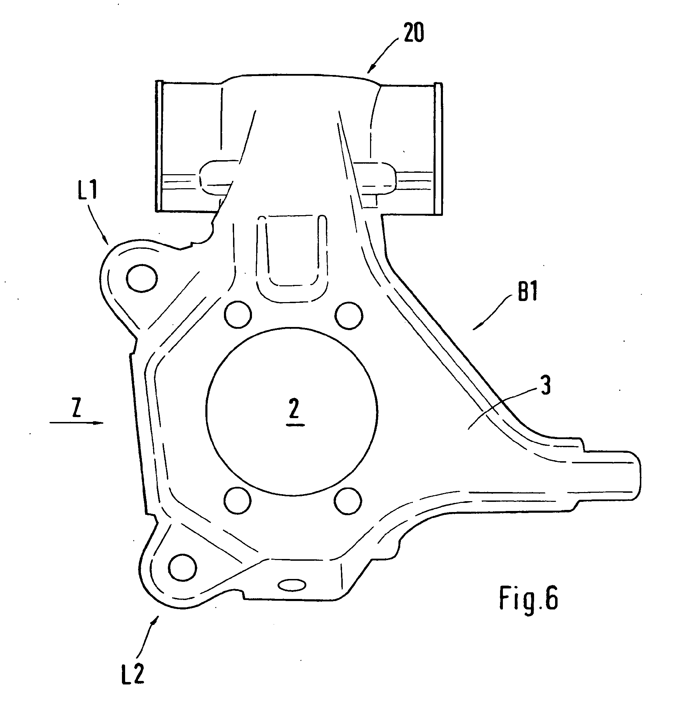

- Fig. 6: eine Rückansicht auf ein schalenförmiges Bauteil des Radträgers und

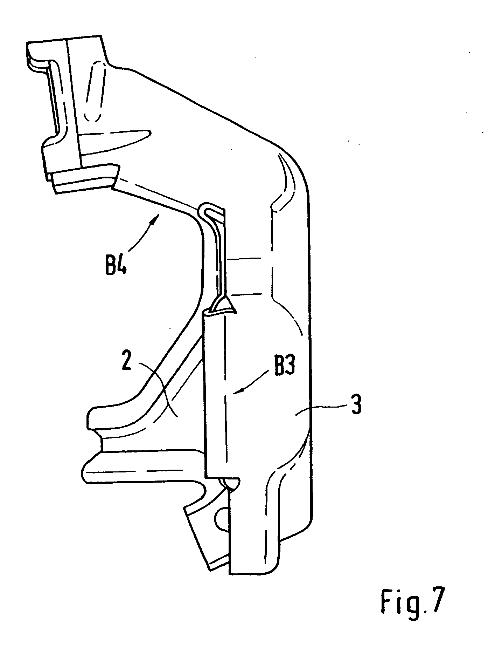

- Fig. 7: eine Ansicht auf den Radträger in Pfeilrichtung Z gesehen.

Ein Radträger 1 für ein Kraftfahrzeug umfasst im Wesentlichen zwei schalenförmige Bauteile 2 und 3, die über mehrere Bördelungen B1 bis B4 miteinander zu einer Baueinheit verbunden sind. Die Verbindungsbereiche für die Bördelungen B1 bis B4 sind zumindest an den Außenkanten der beiden Bauteile 2 und 3 vorgesehen.

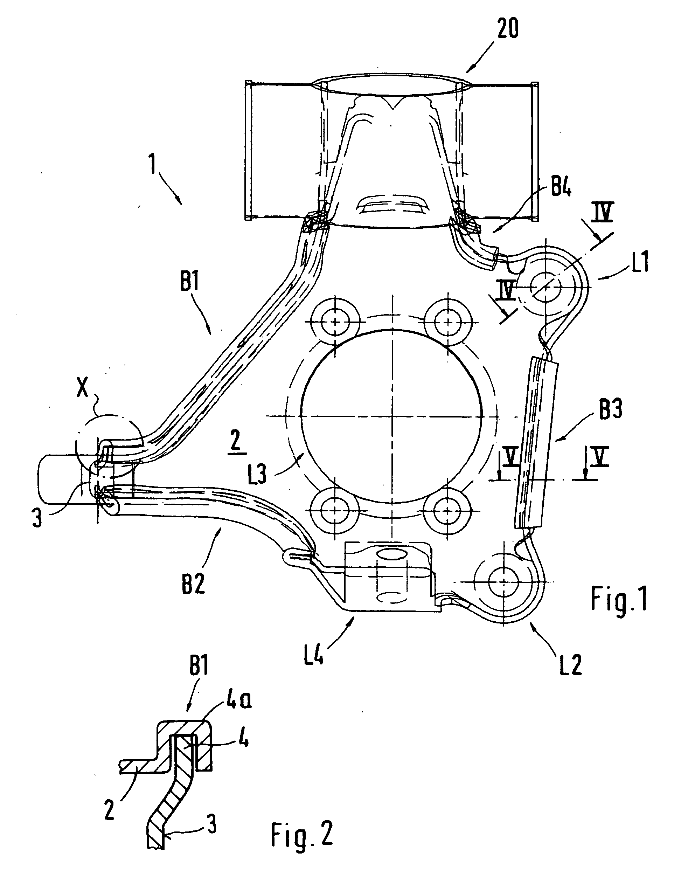

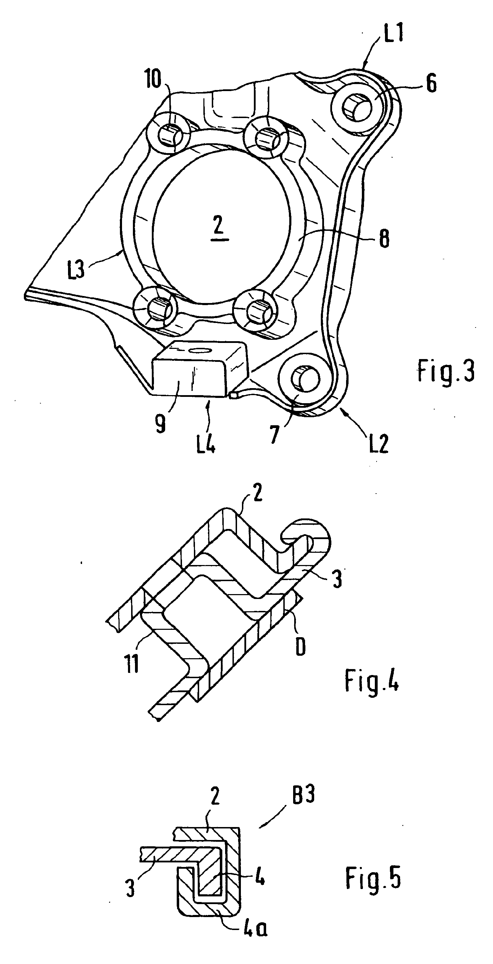

Die Bördelungen B1 bis B4 werden zwischen gegenüberstehenden Kanten 2 und 3 gebildet. So ist in Fig. 2 eine Bördelverbindung am Radträger 1 gem. Fig. 1 gezeigt, bei der die Außenkante 4 des Bauteils 3 von einer Bördelung B1 bzw. von einer Kante 4a des Bauteils 2 fest umgriffen wird. Des Weiteren ist in Fig. 5 die Bördelung B3 im Schnitt dargestellt, wobei die Außenkante 4 nicht rechtwinkelig abgebogen sein muss, wie dargestellt, sondern kann auch schräg zur Grundfläche des Bauteils 2 angestellt sein.

Der Radträger 1 weist zwischen den beiden schalenförmigen Bauteilen 2, 3 Abstützungen 6, 7, 8 und 9 auf, die vorzugsweise in den Lagerbereichen L1 bis L4 angeordnet sind. Diese haben die Aufgabe ein Eindrücken der Lagerschale 2 oder 3 zu verhindern. Diese Abstützungen 6 und 7 sind in Form von Ringhülsen ausgeführt und in einer der Bauteile 2 oder 3 eingelegt. Die Abstützung 8 ist im Zentrum 2 des Radträgers 1 angeordnet und umfasst ein Ringelement mit vier Bohrungen 10. Zwischen den beiden Bördelungen B1 und B4 bildet sich eine Dämpferbeinaufnahme 20.

Zur Vermeidung von Einlegeteilen, wie die Abstützungen, kann ein Bauteil 2 oder 3 auch mit entsprechenden Einrückungen 11 beispielsweise in Topfform vorgesehen sein, wobei eine Stirnfläche der Einrückung 11 an einer Innenfläche des Bauteils 2 oder 3 abgestützt ist, wie Fig. 4 näher zeigt. Ebenfalls kann auch die Abstützung 8 im Zentrum Z der Bauteile 2 oder 3 durch eine entsprechende Eindrückung gebildet werden.

## Patentansprüche

1. Radträger für ein Kraftfahrzeug mit einem ersten und einem zweiten schalenförmigen Bauteil, die miteinander verbunden sind und zwischen sich einen Hohlraum bilden und Lagerungen für Radführungslenker und ein Dämpferbein aufweisen, **dadurch gekennzeichnet, dass** die schalenförmigen Bauteile (2, 3) korrespondierende Verbindungsbereiche zumindest zwischen den Lagerungen (L1, L2, L3, L4, und 20) aufweisen und diese Verbindungsbereiche durch Bördelungen (B1, B2, B3, und B4) gebildet werden.

2. Radträger nach Anspruch 1, **dadurch gekennzeichnet, dass** die Bördelungen (B1 bis B4) in den Verbindungsbereichen der beiden schalenförmigen Bauteile (2, 3) aus an einem Bauteil (2 oder 3) bestehendem Rand (4) oder Abstellung bestehen und am weiteren schalenförmigen Bauteil (2 oder 3) die Bördelung aus einer den Rand (4) oder die Abstellung umgreifenden Bördelrand (4a) besteht.

3. Radträger nach den Ansprüchen 1 oder 2, **dadurch gekennzeichnet, dass** zwischen den beiden schalenförmigen Bauteilen (2, 3) Abstützungen (6, 7, 8 und 9) im Bereich der Lager (L1, L2, L3 und L4) vorgesehen sind.

4. Radträger nach den Ansprüchen 1, 2 oder 3, **dadurch gekennzeichnet, dass** im Zentrum (Z) zwischen den schalenförmigen Bauteilen (2, 3) ein Abstützring (8) mit Bohrungen (10) angeordnet ist, der sich innenseitig der Bauteile (2 oder 3) anlegt.

5. Radträger nach einem der vorhergehenden Ansprüche, **dadurch gekennzeichnet, dass** in einem Bauteil (2 oder 3) die Lager (L1 und L2) einen Hülsenring (6 und 7) aufweisen, der anliegend zu den Bauteilen (2 und 3) angeordnet ist.

6. Radträger nach einem der vorhergehenden Ansprüche, **dadurch gekennzeichnet, dass** das eine Bauteil (2 oder 3) im Bereich der Lager (L1, L2 oder L3) Eindrückungen aufweist, die topfförmig ausgeführt sind und sich mit einer Stirnfläche am weiteren Bauteil (2 oder 3) abstützen und mittels eines Deckels (D) nach außen hin abgedeckt sind.

7. Radträger nach einem der vorhergehenden Ansprüche, **dadurch gekennzeichnet, dass** im Zentrum (Z) der Bauteile (2 oder 3) eine Eindrückung (11) vorgesehen ist, die eine Mittenöffnung aufweist und mit ihrer Stirnfläche am gegenüberstehenden Bauteil (2 oder 3) abgestützt ist.

8. Radträger nach einem der vorhergehenden Ansprüche, **dadurch gekennzeichnet, dass** die Bördelungen (B1 bis B4) mit Sicken zur Versteifung versehen sind.

9. Radträger nach einem der vorhergehenden Ansprüche, **dadurch gekennzeichnet, dass** der Radträger (1) eine Verzinkung aufweist, die zumindest in die Bördelungen (B1 bis B4) einfließt.

## Claims

1. Wheel support for a motor vehicle, with a first and a second shell-shaped component which are connected to each other and form a cavity between them and have mountings for wheel control links and a shock-absorber strut, **characterized in that** the shell-shaped components (2, 3) have corresponding connecting regions at least between the mountings (L1, L2, L3, L4, and 20) and said connecting regions are formed by flanged portions (B1, B2, B3, and B4).

2. Wheel support according to Claim 1, **characterized in that** the flanged portions (B1 to B4) in the connecting regions of the two shell-shaped components (2, 3) comprise a border (4) or end on one component (2 or 3) and, on the further shell-shaped component (2 or 3), the flanged portion comprises a flanged border (4a) which engages around the border (4) or the end.

3. Wheel support according to Claim 1 or 2, **characterized in that**, between the two shell-shaped components (2, 3), supports (6, 7, 8 and 9) are provided in the region of the mountings (L1, L2, L3 and L4).

4. Wheel support according to Claims 1, 2 or 3, **characterized in that** a supporting ring (8) with bores (10) is arranged in the centre (Z) between the shell-shaped components (2, 3) and is positioned on the inside of the components (2 or 3).

5. Wheel support according to one of the preceding claims, **characterized in that**, in one component (2 or 3), the mountings (L1 and L2) have a sleeve ring (6 and 7) which is arranged such that it bears against the components (2 and 3).

6. Wheel support according to one of the preceding claims, **characterized in that** the one component (2 or 3) has, in the region of the mountings (L1, L2 or L3), impressions which are of cup-shape design and are supported by means of an end face on the further component (2 or 3) and are outwardly covered by means of a cover (D).

7. Wheel support according to one of the preceding claims, **characterized in that** one impression (11) is provided in the centre (Z) of the components (2 or 3), said impression having a central opening and being supported by means of its end face on the opposite component (2 or 3).

8. Wheel support according to one of the preceding claims, **characterized in that** the flanged portions (B1 to B4) are provided with beads for stiffening purposes.

9. Wheel support according to one of the preceding claims, **characterized in that** the wheel support (1) has a zinc coating which flows at least into the flanged portions (B1 to B4).

## Revendications

1. Support de roue pour un véhicule automobile, comportant une première et une deuxième composantes en forme de coque qui sont reliées entre elles, constituent entre elles une cavité et présentent des paliers pour des bielles de guidage de roue et une jambe d'amortissement, **caractérisé en ce que** les composantes en forme de coque (2, 3) présentent des zones de liaison correspondantes du moins entre les paliers (L1, L2, L3, L4 et 20) et que ces zones de liaison sont constituées par des sections tombées (B1, B2, B3 et B4).

2. Support de roue selon la revendication 1, **caractérisé en ce que** les sections tombées (B1 à B4) des zones de liaison des deux composantes en forme de coque (2, 3) sont composés d'un bord (4) ou d'un arrêt présent sur une composante (2 ou 3) et que, sur l'autre composante en forme de coque (2 ou 3), la section tombée est composée d'un bord tombé (4a) entourant le bord (4) ou l'arrêt.

3. Support de roue selon les revendications 1 ou 2, **caractérisé en ce qu'**entre les deux composantes en forme de coque (2, 3), des appuis (6, 7, 8 et 9) sont prévus au niveau des paliers (L1, L2, L3 et L4).

4. Support de roue selon les revendications 1, 2 ou 3, **caractérisé en ce qu'**au centre (Z), entre les composantes en forme de coque (2, 3), est disposé un anneau d'appui (8) pourvu de perforations (10) et qui se pose sur la face interne des composantes (2 ou 3).

5. Support de roue selon l'une des revendications précédentes, **caractérisé en ce que**, dans une composante (2 ou 3), les paliers (L1 et L2) présentent un manchon annulaire (6 et 7) qui est disposé en contact avec les composantes (2 et 3).

6. Support de roue selon l'une des revendications précédentes, **caractérisé en ce qu'**une composante (2 ou 3) présente, au niveau des paliers (L1, L2 ou L3), des renfoncements qui sont réalisés en forme de cuvettes et s'appuient par une surface frontale sur l'autre composante (2 ou 3) et sont recouverts vers l'extérieur par un couvercle (D).

7. Support de roue selon l'une des revendications précédentes, **caractérisé en ce qu'**au centre (Z) des composantes (2 ou 3), il est prévu un renfoncement (11) qui présente un orifice médian et s'appuie par sa surface frontale sur la composante opposée (2 ou 3).

8. Support de roue selon l'une des revendications précédentes, **caractérisé en ce que** les sections tombées (B1 à B4) sont pourvues de creux pour le raidissement.

9. Support de roue selon l'une des revendications précédentes, **caractérisé en ce que** le support de roue (1) présente un zingage qui s'infiltre au moins dans les sections tombées (B1 à B4).
